# EUROPEAN PATENT SPECIFICATION

(11) **EP 1 763 196 B1**
(45) Date of publication and mention of the grant of the patent: **23.04.2014**
(21) Application number: 06120194.3
(22) Date of filing: 06.09.2006
(51) Int. Cl.: H04L 29/06

(54) **Information processing apparatus, verification processing apparatus and control methods thereof**
Informationsverarbeitungsvorrichtung, Überprüfungsverarbeitungsvorrichtung, und Steuerverfahren dafür
Appareil de traitement de l'information, appareil de vérification, et méthodes de contrôle

(30) Priority: 09.09.2005 JP 2005263074; 29.08.2006 JP 2006232812
(43) Date of publication of application: 14.03.2007
(73) Proprietor: Canon Kabushiki Kaisha, Ohta-Ku, Tokyo 146-8501 (JP)
(72) Inventor: Suga, Yuji, Ohta-ku Tokyo (JP)
(74) Representative: Hitching, Peter Matthew

(56) References cited:
- EP-A- 1 326 424
- WO-A-00/75925
- US-A- 5 898 779
- YONGDONG WU ET AL: "Progressive protection of jpeg2000 codestreams" IMAGE PROCESSING, 2004. ICIP '04. 2004 INTERNATIONAL CONFERENCE ON SINGAPORE 24-27 OCT. 2004, PISCATAWAY, NJ, USA,IEEE, 24 October 2004 (2004-10-24), pages 3447-3450, XP010786539 ISBN: 0-7803-8554-3

## Description

### BACKGROUND OF THE INVENTION

### Field of the Invention

The present invention relates to an information processing apparatus, verification processing apparatus, and control methods thereof, and associated computer program and storage medium.

### Description of the Related Art

In recent years, along with rapid development and prevalence of computers and their networks, many kinds of information such as text data, image data, audio data, and the like have been digitized. Digital data is free from deterioration due to aging or the like and can be saved in a perfect state forever. In addition, the digital data can be easily copied, edited, and modified.

Such copying, editing, and modifying of digital data are very useful for users, while protection of digital data poses a serious problem. In particular, when documents and image data are distributed via wide area networks such as the Internet and the like, since digital data are readily changed, a third party may alter the data.

In order for a recipient to detect whether or not incoming data has been altered, a processing technology called digital signature has been proposed as a scheme for verifying additional data to prevent alteration. The digital signature processing technology can prevent not only data alteration but also spoofing, denial, and the like on the Internet.

Digital signature, a Hash function, public key cryptosystem, and public key infrastructure (PKI) will be described in detail below.

### [Digital Signature]

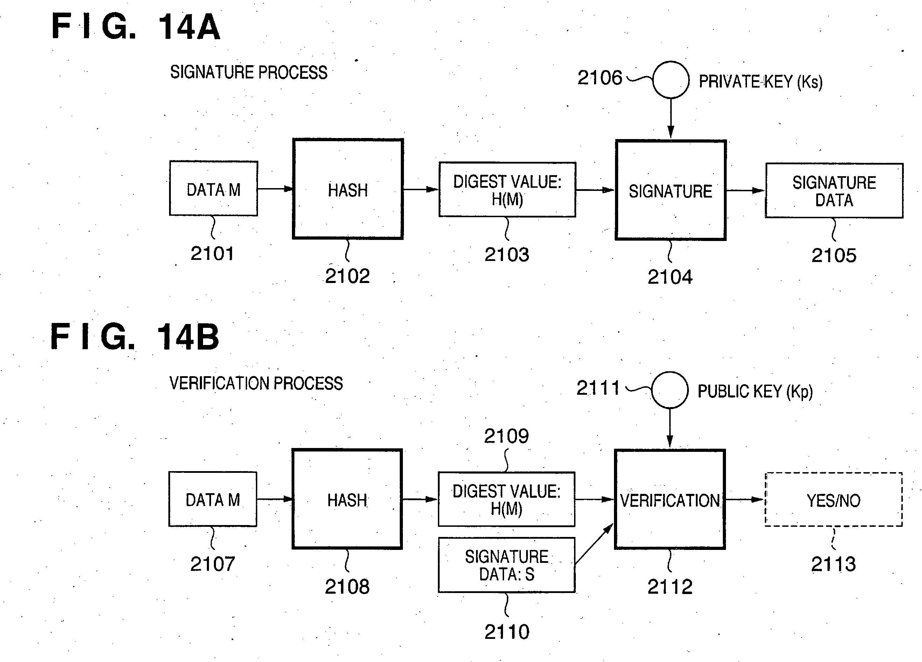

Figs. 14A and 14B are views for explaining a signature generation process and a signature verification process, and these processes will be described below with reference to Figs. 14A and 14B. Upon generating digital signature data, a Hash function and public key cryptosystem are used.

Let Ks (2106) be a private key, and Kp (2111) be a public key. A sender applies a Hash process 2102 to data M (2101) to calculate a digest value H(M) 2103 as fixed-length data. Next, the sender applies a signature process 2104 to the fixed-length data H(M) using the private key Ks (2106) to generate digital signature data S (2105). The sender sends this digital signature data S (2105) and data M (2101) to a recipient.

The recipient converts (decrypts) the received digital signature data S (2110) using the public key Kp (2111). The recipient generates a fixed-length digest value: H(M) 2109 by applying a Hash process 2108 to the received data M (2107). A verification process 2112 verifies whether or not the decrypted data matches the digest value H(M). If the two data do not match as a result of this verification, it can be detected that the data has been altered.

In digital signature, public key cryptosystems such as RSA, DSA (to be described in detail later), and the like are used. The security of these digital signatures is based on the fact that it is difficult for an entity other than a holder of a private key in terms of calculations to counterfeit a signature or to decode a private key.

### [Hash Function]

A Hash function will be described below. The Hash function is utilized together with the digital signature processing to shorten a processing time period for an assignment of the signature by applying lossy compression to data to be signed. That is, the Hash function has a function of processing data M having an arbitrary length, and generating output data H(M) having a constant length. Note that the output H(M) is called Hash data of plaintext data M.

Especially, a one-way Hash function is characterized in that if data M is given, it is difficult in terms of a computation volume to calculate plaintext data M' which meets H(M') = H(M). As the one-way Hash function, standard algorithms such as MD2, MD5, SHA-1, and the like are available.

### [Public Key Cryptosystem]

A public key cryptosystem will be described below. The public key cryptosystem utilizes two different keys, and is characterized in that data encrypted by one key can only be decrypted by the other key. Of the two keys, one key is called a public key, and is open to the public. The other key is called a private key, and is possessed by an identified person.

Digital signatures using the public key cryptosystem, RSA signature, DSA signature, Schnorr signature, and the like are known. In this case, the RSA signature described in R.L. Rivest, A. Shamir and L. Aldeman: "A method for Obtaining Digital Signatures and Public-Key Cryptosystems", Communications of the ACM, v. 21, n. 2, pp. 120 - 126, Feb 1978. will be exemplified. Also, DSA signature described in Federal Information Processing Standards (FIPS) 186-2, Digital Signature Standard (DSS), January 2000 will be explained additionally.

### [RSA Signature]

Primes p and q are generated to have n = pq. λ(n) is set as a least common multiple of p-1 and q-1. Appropriate e prime to λ(n) is selected to have a private key d = 1/e (mod λ(n)) where e and n are public keys. Also, let H() be a Hash function.

### RSA Signature Generation] Signature generation sequence for document M

[Let s: = H(M)^d (mod n) be signature data.

### [RSA Signature Verification] Verification sequence of signature (s, T) for document M

It is verified if H(M) = s^e (mod n).

### [DSA Signature]

Let p and q be primes, and p-1 be a value that divides q. Let q be an element (generator) of order q, which is arbitrarily selected from Z_p* (a multiplicative group excluding zero from cyclic group Z_p of order p). Let x arbitrary selected from Z_p* be a private key to give public key y by y: = g^x mod p. Let H() be a Hash function.

### [DSA Signature Generation] Signature generation sequence for document M

1) α is arbitrarily selected from Z_q to have T: = (g^α mod p) mod q.
2) We have c: = H(M).
3) We have s: = α ^- 1 (c + xT) mod q to set (s, T) as signature data.

### [DSA Signature Verification] Verification sequence of signature (s, T) for document M

It is verified if T = (g^(h(M) s^-1) y^(T s^-1) mod p) mod q.

### [Public Key Infrastructure]

In order to access resources in a server in a client-server communication, user authentication is required. As one means of user authentication, a public key certificate such as ITU-U Recommendation X.509 or the like is prevalently used. The public key certificate is data which guarantees binding between a public key and its user, and is digitally signed by a trusted third party called a Certification Authority: CA. A user authentication scheme using SSL (Secure Sockets Layer) used in a browser is implemented by confirming if the user has a private key corresponding to a public key included in the public key certificate presented by the user.

Since the public key certificate is signed by the CA, the public key of the user or server included in it can be trusted. For this reason, when a private key used in signature generation by the CA leaks or becomes vulnerable, all the public key certificates issued by this CA become invalid. Since some CAs manage a huge number of public key certificates, various proposals have been made to reduce the management cost. The present invention to be described later can reduce the number of certificates to be issued and server accesses as a public key repository as its effects.

In ITU-U Recommendation X.509 v.3 described in ITU-U Recommendation X.509/ISO/IEC 9594-8: "Information technology - Open Systems Interconnection - The Directory: Public-key and attribute certificate frameworks"., an ID and public key information of an entity (subject) to be certified are included as data to be signed. By a signature operation such as the aforementioned RSA algorithm or the like for a digest obtained by applying a Hash function to these data to be signed, signature data is generated. The data to be signed has an optional field "extensions", which can include extended data unique to an application or protocol.

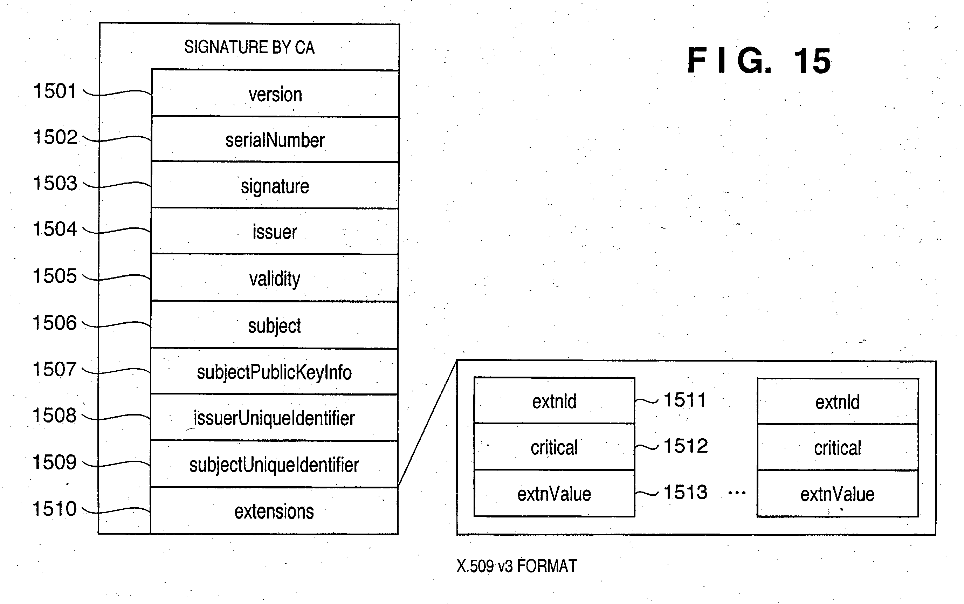

Fig. 15 shows the format specified by X.509 v.3, and information shown in each individual field will be explained below. A "version" field 1501 stores the version of X.509. This field is optional, and represents v1 if it is omitted. A "serial Number" field 1502 stores a serial number uniquely assigned by the CA. A "signature" field 1503 stores a signature scheme of the public key certificate. An "issuer" field 1504 stores an X.500 identification name of the CA as an issuer of the public key certificate. A "validity" field 1505 stores the validity period (start date and end date) of a public key.

A "subject" field 1506 stores an X.500 identification name of a holder of a private key corresponding to the public key included in this certificate. A "subjectPublicKeyInfo" field 1507 stores the public key which is certificated. An "issuerUniqueIdentifier" field 1508 and "subjectUniqueIdentifier" fields 1509 are optional fields added since v2, and respectively store unique identifiers of the CA and holder.

An "extensions" field 1510 is an optional field added in v3, and stores sets of three values, i.e., an extension type (extnId) 1511, critical bit (critical) 1512, and extension value (extnValue) 1513. The v3 "extensions" field can store not only a standard extension type specified by X.509 but also a unique, new, extension type. For this reason, how to recognize the v3 "extensions" field depends on the application side. The critical bit 1512 indicates if that extension type is indispensable or negligible.

The digital signature, Hash function, public key cryptosystem, and public key infrastructure have been described.

A scheme for dividing text data to be signed into a plurality of text data and attaching digital signatures to respective text data using the aforementioned digital signature processing technology has been proposed (see Japanese Patent Laid-Open No. 10-003257). According to this proposed scheme, when digitally signed text data is partially quoted, the verification process can be done for the partially quoted text.

The proposed scheme handles only text data as data to be signed. However, along with diversification of digital data in recent years, compound contents including a plurality of types of contents may be digitally signed. When such compound contents are processed as a group of binary data, and are to be digitally signed via, e.g., a compression process or the like, if a third party divides the contents into sub-contents and tries to re-distribute the sub-contents, signature data in the sub-contents can no longer be verified.

To avoid such problem, as in the proposed scheme, all sub-contents to be signed may be digitally signed in addition to text data. However, in this case, both the signature generation and signature verification require huge computation cost in their encryption or decryption process. Hence, the number of processes increases with increasing number of sub-contents. A photographic system with selected area image authentication is disclosed in US 5,898,779.

### SUMMARY OF THE INVENTION

It is, therefore, an object of the present invention to allow signature verification not only for text data but also for compound contents of digital data stored in various formats even when a sub-content as a part of such compound contents exists separately. Also, it is an object of the present invention to provide a signature processing technology which can set computation volumes of signature generation and signature verification processes to be constant without being proportional to the number of divided sub-contents.

According to the present invention which at least mitigates the aforementioned problems together or individually, there is provided an information processing apparatus comprising, a first generation unit adapted to generate data to be signed by dividing a digital document into regions, a second generation unit adapted to generate first digest values of the data to be signed and identifiers used to identify the data to be signed, a third generation unit adapted to generate signature information based on a plurality of the first digest values and the identifiers obtained from the digital document, and a fourth generation unit adapted to generate a first signed digital document based on the signature information and the data to be signed.

Also, there is provided a verification processing apparatus which verifies a digital document based on a signed digital document, the apparatus comprising, an extraction unit adapted to extract a signature information from the signed digital document, a determination unit adapted to determine whether a first digest value and a identifier in the signature information have been altered or not, an obtaining unit adapted to obtain a data to be signed from the signed digital document based on the identifier when said determination unit determines that the first digest value and the identifier have not been altered, a calculation unit adapted to calculate a second digest value of the data to be signed, a comparison unit adapted to compare the first digest value and the second digest value, and a verification result generation unit adapted to generate a verification result based on the comparison result.

According to a first aspect of the present invention, there is provided an information processing apparatus as specified in claims 1 to 4. According to a second aspect of the present invention there is provided a verification processing apparatus as specified in claim 5 to 8. According to a third aspect of the present invention, there is provided a method for controlling an image processing apparatus as specified in claim 9 to 12. According to a fourth aspect of the present invention there is provided a method for controlling a verification processing apparatus as specified in claim 13 to 16. According to further aspects of the invention, there are provided a computer program and computer readable storage medium as specified in claims 17 and 18.

Further features of the present invention will become apparent from the following description of exemplary embodiments with reference to the attached drawings.

### BRIEF DESCRIPTION OF THE DRAWINGS

Fig. 1 is a diagram showing an example of the arrangement of a system corresponding to embodiments of the present invention;

Fig. 2 is a block diagram showing an example of the functional arrangement of the system corresponding to the embodiments of the present invention;

Fig. 3 is a block diagram showing an example of the hardware arrangement of the system corresponding to the embodiments of the present invention;

Fig. 4 is a functional block diagram of a digital document generation process and digital document operation process corresponding to the embodiments of the present invention;

Fig. 5 is a flowchart showing an example of the processing in an intermediate digital document generation process corresponding to the embodiments of the present invention;

Figs. 6A and 6B are views for explaining an example of digital data corresponding to the embodiments of the present invention;

Figs. 7A and 7B are views for explaining an intermediate digital document and digital document corresponding to the embodiments of the present invention;

Fig. 8 is a flowchart showing an example of the processing in a signature generation process corresponding to the embodiments of the present invention;

Figs. 9A and 9B are views showing an example of the structure of digital document corresponding to the embodiments of the present invention;

Fig. 10 is a flowchart showing an example of the processing in a signature verification process corresponding to the embodiments of the present invention;

Figs. 11A and 11B are views showing an example of the structure of signature data after a reconstruction process corresponding to the embodiments of the present invention;

Fig. 12 is a view for explaining a browsing example of digital data corresponding to the third embodiment of the present invention;

Fig. 13 is a view for explaining another browsing example of digital data corresponding to the third embodiment of the present invention;

Fig. 14A is a diagram showing a general example of a signature generation process;

Fig. 14B is a diagram showing a general example of a signature verification process; and

Fig. 15 is a view for explaining the data format of a public key certificate X.509 v.3.

### DESCRIPTION OF THE EMBODIMENT

Preferred embodiments of the present invention will now be described in detail in accordance with the accompanying drawings.

### <First Embodiment>

A signature generation process and signature verification process corresponding to this embodiment include a digital document generation process and digital document operation process. More specifically, the digital document generation process divides image data generated by scanning a paper document into sub-contents and generates compound contents (to be referred to as a digital document hereinafter) by digitally signing a desired sub-content group by the user. The digital document operation process extracts sub-contents from the digital document, verifies signature information of the sub-contents that require verification, and then performs a contents consumption process such as browsing, printing, or the like, a contents reconstruction process, and the like.

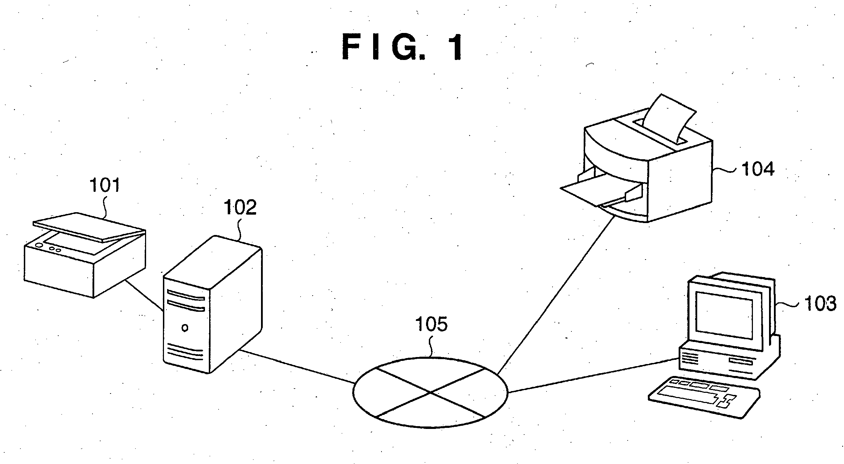

Fig. 1 is a diagram showing an example of the arrangement of a system corresponding to this embodiment. The system shown in Fig. 1 is configured by connecting a scanner 101, a computer 102 as a processing apparatus for generating and verifying a digital document, a computer 103 for editing and modifying a digital document, and a printer 104 for printing a digital document via a network 105.

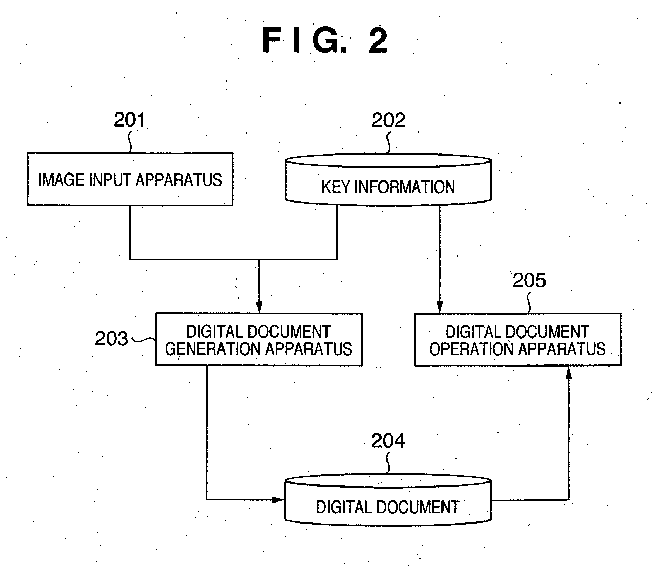

Fig. 2 is a functional block diagram showing an example of the functional arrangement of the system corresponding to this embodiment. Referring to Fig. 2, an image input apparatus 201 receives image data. Key information 202 includes an encryption key used to generate a digital signature and a decryption key used to verify the digital signature. A digital document generation apparatus 203 as an information processing apparatus generates a digital document 204 by attaching signature information to the input image data based on the input image data and the encryption key of the key information 202. A digital document operation apparatus 205 (verification processing apparatus) verifies the generated digital document 204 using the decryption key of the key information 202, and performs operations such as data modification, editing, printing, and the like of the digital document. The digital signature processing will be explained according to the public key cryptosystem. At this time, the encryption key of the key information 202 corresponds to a private key 406, and the decryption key of the key information 202 corresponds to a public key 414.

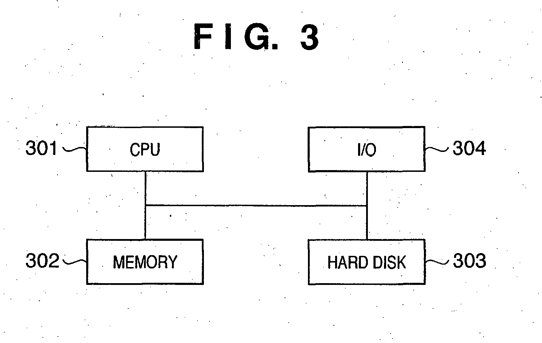

Fig. 3 is a block diagram showing an example of the internal hardware arrangement of the digital document generation apparatus 203 and digital document operation apparatus 205. A CPU 301 controls the apparatus as a whole by executing software. A memory 302 temporarily stores software and data executed by the CPU 301. A hard disk 303 stores software and data. An input/output (I/O) unit 304 receives input information from a keyboard, mouse, scanner, and the like, and outputs information to a display and printer.

### [Digital Document Generation Process]

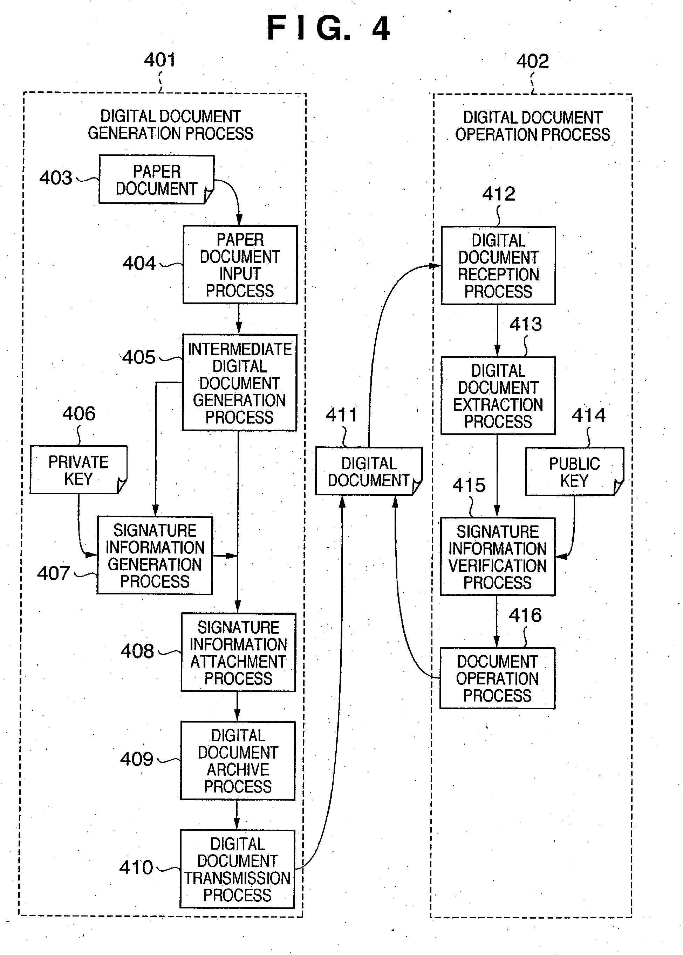

The process corresponding to this embodiment will be described below. Fig. 4 is a functional block diagram showing an example of the process corresponding to this embodiment. As shown in Fig. 4, the process corresponding to this embodiment roughly includes a digital document generation process 401 and digital document operation process 402.

In the digital document generation process 401 corresponding to this embodiment, a paper document input process 404 inputs a paper document 403. Next, an intermediate digital document generation process 405 generates an intermediate digital document by analyzing the paper document 403. A signature information generation process 407 generates signature information based on the intermediate digital document and a private key 406. A signature information attachment process 408 associates the intermediate digital document with the signature information. A digital document archive process 409 generates a digital document 411 by integrating the intermediate digital document and signature information. The digital document 411 corresponds to the digital document 205 in Fig. 2. A digital document transmission process 410 transmits the digital document 411 to the digital document operation process 402.

In the digital document operation process 402, a digital document reception process 412 receives the digital document 411. A digital document extraction process 413 extracts the intermediate digital document and signature information from the received digital document 411. A signature information verification process 415 performs verification based on the intermediate digital document, the signature information, and a public key 414. A document operation process 416 performs an operation such as modification, editing, printing, or the like of the extracted digital document.

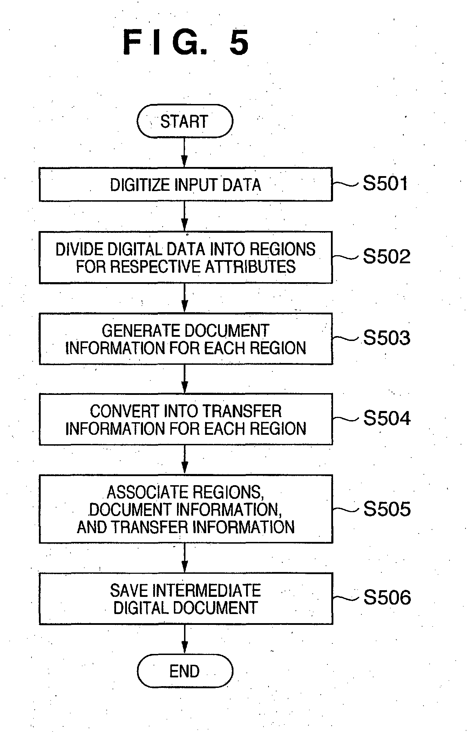

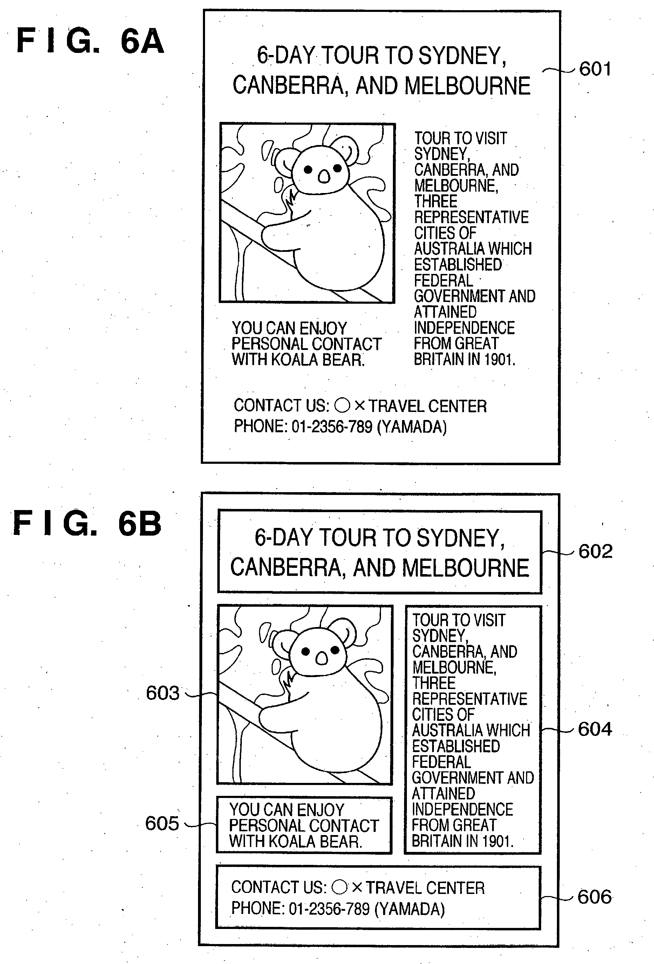

Details of the functional blocks in Fig. 4 will be further described. Details of the intermediate digital document generation process 405 will be described below with reference to Fig. 5 and Figs. 6A and 6B. Fig. 5 is a flowchart showing an example of the processing in the intermediate digital document generation process 405 corresponding to this embodiment. Figs. 6A and 6B show an example of digital data and a regional division process result.

Referring to Fig. 5, in step S501 data obtained by the paper document input process 404 is digitized to generate digital data. Fig. 6A shows an example of the generated digital data.

In step S502, the digital data is divided into regions for respective attributes. The attributes in this case include text, photo, table, and picture.

The regional division process extracts sets such as a group of 8 connected black pixels of contour, a group of 4 connected white pixels of contour, and the like in the digital data, and can extract regions with feature names such as text, picture or figure, table, frame, and line. Such scheme is described in U.S. Patent No. 5,680,478. Note that the implementation method of the regional division process is not limited to such specific process, but other methods may be applied.

Fig. 6B shows an example of a regional division result by determining attributes based on extracted feature amounts. Note that as attributes of respective regions, 602, 604, 605, and 606 indicate text regions, and 603 indicates a color photo region.

In step S503, document information is generated for each region obtained in step S502. Each document information includes an attribute, layout information such as position coordinates on a page or the like, a character code string if the attribute of the divided region of interest is text, a document logical structure such as a paragraph, title, or the like, and so forth.

In step S504, each region obtained in step S502 is converted into transfer information. The transfer information is required for rendering. More specifically, the transfer information includes a resolution-variable raster image, vector image, monochrome image, or color image, a file size of each transfer information, text as a character recognition result if the attribute of the divided region of interest is text, positions and font of individual characters, reliability of characters obtained by character recognition, and the like. Taking Fig. 6B as an example, the text regions 602, 604, 605, and 606 are converted into vector images, and the color photo region 603 is converted into a color raster image.

In step S505, the regions divided in step S502, the document information generated in step S503, and the transfer information obtained in step S504 are associated with each other. Respective pieces of associated information are described in a tree structure. The transfer information and document information generated in the above steps will be referred to as components hereinafter.

In step S506, the components generated in the above steps are saved as an intermediate digital document. The saving format is not particularly limited as long as it can express the tree structure. In this embodiment, the intermediate digital document may be saved using XML as an example of a structured document.

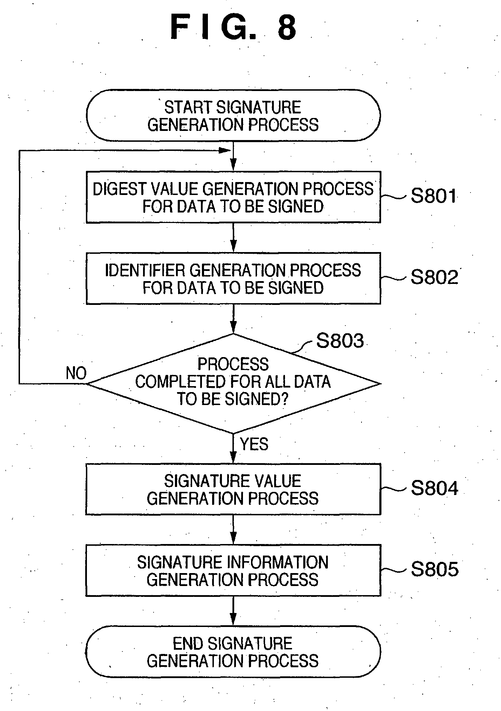

The signature information generation process 407 in Fig. 4 will be described below. In this process, digital signatures are generated for the components of the intermediate digital document generated previously. Fig. 8 is a flowchart of the signature information generation process in this embodiment. The signature information generation process 407 will be described below with reference to Fig. 8.

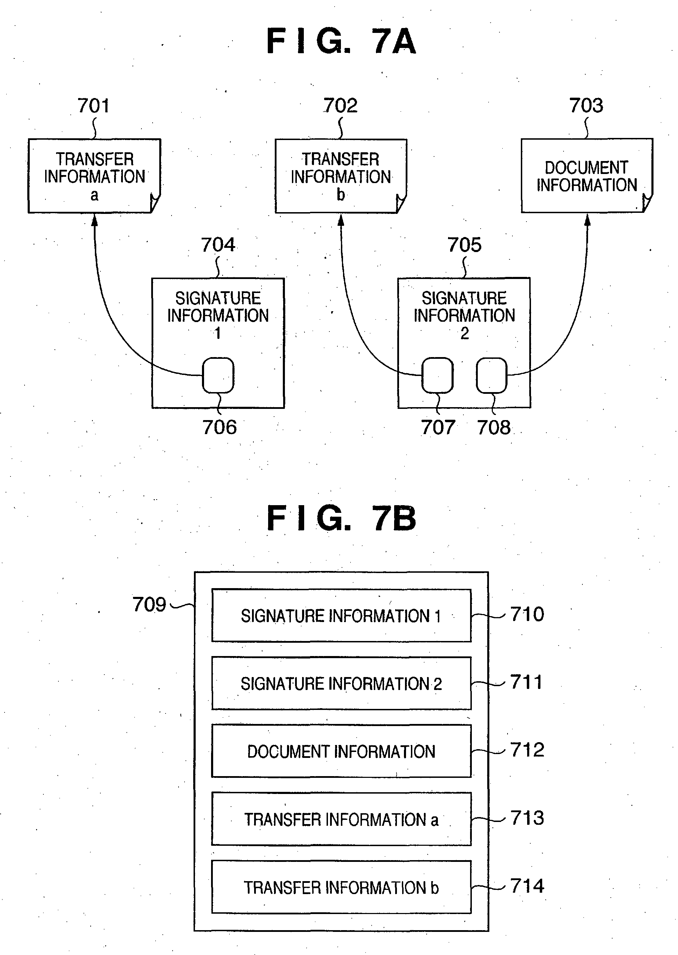

In step S801, a digest value of data to be signed is generated for each data to be signed. Note that the data to be signed is the one which is included in the intermediate digital document, and can be considered as transfer information a (701), transfer information b (702), or document information (703) in Fig. 7A (to be described later). In order to generate a digest value, this embodiment applies a Hash function. Since the Hash function has been described in the paragraphs of "Description of the Related Art", a detailed description thereof will be omitted.

In step S802, an identifier of the data to be signed is generated for each data to be signed. Note that the identifier needs only uniquely identify the data to be signed. For example, in this embodiment, a URI specified by RFC2396 is applied as the identifier of the data to be signed. However, the present invention is not limited to this specification, and various other values may be applied as identifiers.

It is checked in step S803 if processes of steps S801 and S802 have been applied to all the data to be signed. If such processes have been applied to all the data to be signed ("YES" in step S803), the flow advances to step S804; otherwise, the flow returns to step S801.

In step S804, a signature value generation process is executed using the private key 406 for all the digest values generated for an identical digital document in step S801 and all the identifiers generated in step S802 to calculate a signature value. In order to generate the signature value, this embodiment applies the digital signature described in the paragraphs of "Description of the Related Art". A detailed description of the practical arithmetic processing of the digital signature will be omitted. The data M (2101) in the signature generation process flow shown in Fig. 14A corresponds to all the digest values generated in step S801 and all the identifiers generated in step S802 (this data group will be referred to as aggregate data). Likewise, the private key Ks 2106 corresponds to the private key 406 in Fig. 4.

Subsequently, in step S805 signature information is configured using the aggregate data (all the digest values generated in step S801 and all the identifiers generated in step S802) and the signature value generated in step S804, thus ending the signature information generation process.

Note that the signature value generation process in step S804 may be executed for some of the generated digest values and identifiers (i.e., a plurality of generated digest values and identifiers) rather than all the digest values and all the identifiers generated. In this case, sub-contents which are more likely to be re-used in the original contents may be selected automatically or manually by the user, and a signature value may be calculated based on the digest values and identifiers associated with the selected sub-contents. In this case, in step S805 signature information is configured using some digest values and identifiers used to calculate a signature value, and the calculated signature value. Even when the signature value is calculated using the plurality of (and not all of) digest values and identifiers, the signature value generation process can be done only once for the entire contents.

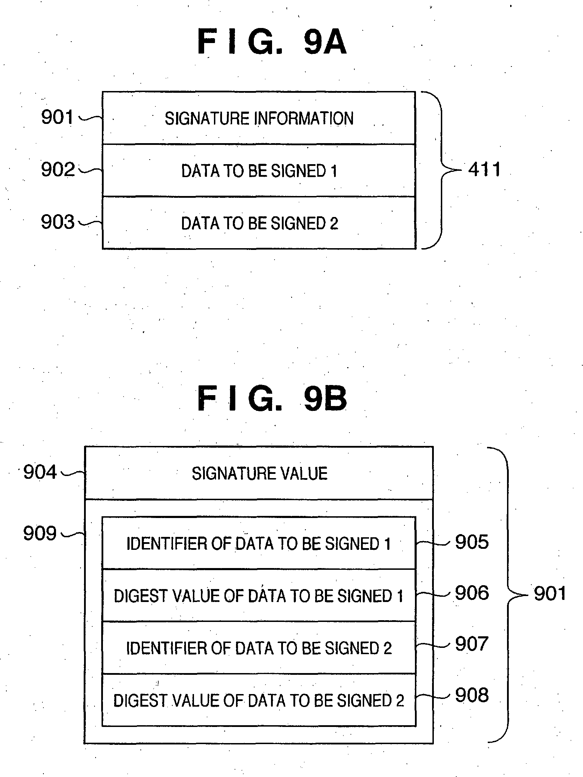

The structure of the digital document 411 corresponding to this embodiment will be described below with reference to Figs. 9A and 9B. Figs. 9A and 9B show an example of the structure of the digital document 411 corresponding to this embodiment. Fig. 9A shows the structure of the entire digital document 411. As shown in Fig. 9A, the digital document 411 preferably includes signature information 901, data to be signed 1 (902) and data to be signed 2 (903). Fig. 9B shows an example of the detailed structure of the signature information 901 in Fig. 9A. As shown in Fig. 9B, the signature information 901 preferably includes a signature value 904, an identifier of the data to be signed 1 (905), a digest value of the data to be signed 1 (906), an identifier of the data to be signed 2 (907) and a digest value of the data to be signed 2 (908). The data 905 to 908 form aggregate data 909.

Fig. 9A shows the example of the structure of the digital document 411 when one signature information 901 is generated for two data to be signed 1 (902) and data to be signed 2 (903). Fig. 9B shows the example of the detailed structure of the signature information 901. In Fig. 9B, the identifier of the data to be signed 1 (905) and the identifier of the data to be signed 2 (907) are generated in step S802 described above. Also, the digest value of the data to be signed 1 (906) and the digest value of the data to be signed 2 (908) are generated in step S801 described above. The signature value 904 is generated in step S804 using the data 905 to 908, i.e., the aggregate data 909.

Subsequently, the signature data attachment process 408 will be described below with reference to Fig. 7A. Reference numerals 701 and 702 denote two pieces of transfer information of the intermediate digital document generated in the intermediate digital document generation process 405; and 703, document information. Reference numerals 704 and 705 denote two pieces of signature information generated in the signature information generation process 407.

Each signature information is embedded with an identifier, which indicates transfer information or document information corresponding to the data to be signed, as described above. In Fig. 7A, an identifier 706 which indicates the data to be signed (i.e., the transfer information 701) is embedded in the signature information 704. The signature information and data to be signed need not always have one-to-one correspondence. For example, identifiers 707 and 708 which respectively indicate the transfer information 702 and the document information 703 as the data to be signed may be embedded on the signature information 705.

Note that the transfer information a (701) is considered as the data to be signed 1 (902), and the transfer information b (702) and the document information 703 are considered as the data to be signed 2 (903). Also, the signature information 1 (704) and signature information 2 (705) can be considered as the signature information 901.

The digital document archive process 409 will be described below with reference to Figs. 7A and 7B. The intermediate digital document and signature information generated in the processes described so far exist as independent data, as shown in Fig. 7A. Hence, the digital document archive process archives these data to generate one digital document. Fig. 7B shows an example of archive data of the intermediate digital document and signature information. Archive data 709 corresponds to the digital document 411 shown in Fig. 4. As for 701 to 705 shown in Fig. 7A, 701 corresponds to 713; 702 to 714; 703 to 712; 704 to 710; and 705 to 711.

The digital document generation process in this embodiment has been explained. As described above, in the digital document generation process according to this embodiment, the original contents are separated into a plurality of sub-contents under the assumption that the original contents are separated and are re-distributed or re-used later, and an identifier is given to each or a group of sub-contents. As the identifier, the URI specified by RFC2396 may be applied, as has been explained in the description of step S802. However, the present invention is not limited to this and, for example, relative position information of a sub-content in the original contents may be used. Also, a value calculated using a one-way Hash function from meta data such as number information uniquely assigned to a header field of the sub-content, form information such as a contents holder, date, and the like included in the header field, and the like may be used as identifiers.

Furthermore, a digest value is generated by calculation using a one-way Hash function having a sub-content corresponding to each identifier as an input. A set (aggregate data) of the identifier and digest value is given to the compound contents. In this manner, even when some sub-contents are deleted from the original contents in the document operation process, and contents reconstructed using the remaining sub-contents are distributed, the signature verification process of the reconstructed contents can be made. Furthermore, even when a signature is not generated for each sub-content block (i.e., even when signatures are not generated in one-to-one correspondence with sub-contents), whether or not each sub-content block is altered can be verified.

The possibility of verification in the reconstructed contents will be described below in association with the digital document operation process.

### [Digital Document Operation Process]

The digital document 411 received in the digital document reception process 412 in Fig. 4 undergoes processing opposite to the digital document archive process 409 in the digital document extraction process 413. That is, individual data of the intermediate digital document and signature information are extracted from the digital document 411.

In the signature information verification process 415, the input data: M (2107) in the signature verification process flow shown in Fig. 14B corresponds to the aggregate data 909. Likewise, the digital signature data: S (2110) corresponds to the signature information 901, and the public key 2111 corresponds to the public key 414 in Fig. 4. In this manner, whether or not the aggregate data 909 has been altered can be checked.

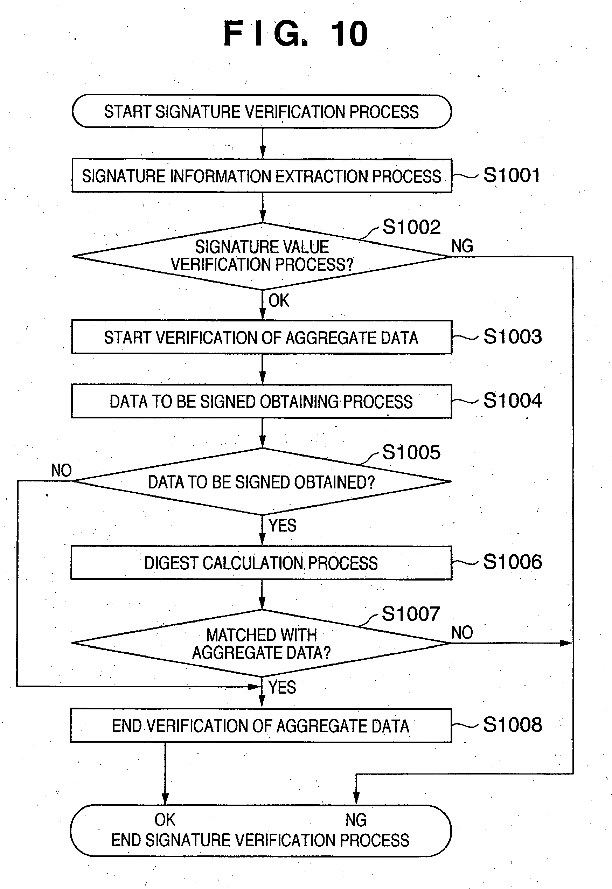

If it can be confirmed that the aggregate data has not been altered, it is verified if a digest value corresponding to an identifier included in the aggregate data matches that generated from data to be signed. The aforementioned process will be described below with reference to Fig. 9 and Fig. 10. Fig. 10 shows an example of a flowchart of the signature verification process according to the present embodiment.

Referring to Fig. 10, in step S1001 the signature information 901 is extracted from the digital document 411 by the digital document extraction process 413. It is then verified based on the signature value 904 included in the signature information 901 using the method described in Fig. 14B whether or not the aggregate data 909 has been altered. That is, the digest value 2109 is generated to have the identifier 905 and digest value 906, and the identifier 907 and digest value 908 as the input data M. Furthermore, the signature value 904 is decrypted using the public key 414 to generate a digest value. It is then checked whether the two generated digest values match or not. If these values match, it is determined that the aggregate data 909 has not been altered.

If verification has failed in step S1002 ("NG" in step S1002), the signature verification process ends, and "NG" is returned as a result. On the other hand, if verification has succeeded in step S1002 ("OK" in step S1002), processes in steps S1003 to S1008 are executed for respective identifiers 905 and 907 included in the aggregate data 909.

In step S1004, data to be signed 902 or 903 is extracted from the digital document 411 based on the identifier 905 or 907. It is checked in step S1005 if the data to be signed 902 or 903 can be obtained. If the data to be signed 902 or 903 can be obtained, the flow advances to step S1006. If the data to be signed 902 or 903 cannot be obtained, the flow jumps to step S1008. If the next identifier exists, the process in step S1004 is executed for the corresponding data to be signed. If data to be signed that cannot be obtained from the digital document 411 exists, a message indicating that a sub-content corresponding to the identifier of interest is not included as data to be verified may be displayed on the digital document operation apparatus 205. This display can be made by utilizing a display device of the computer 103 or printer 104 in the arrangement shown in Fig. 1.

In step S1006, a digest value: H(M) of the data to be signed 902 or 903 is calculated based on the method shown in Fig. 14B. It is checked in step S1007 if the digest calculation result matches the digest value 906 or 908 included in the aggregate data 909. If the two values match, the flow advances to step S1008. If the next identifier exists in step S1008, the process in step S1004 is executed for corresponding data to be signed. If the two digest values do not match, the signature verification process ends, and "NG" is returned as a result. If it is determined in step S1008 that the repetitive processes have been done for all identifiers, the signature verification process ends, and "OK" is returned as a result. The digital document operation process 416 in Fig. 4 will be described below. The operation includes the contents consumption process such as browsing, printing, or the like. However, how to consume the contents does not influence this embodiment as long as a process that allows the user to enjoy the contents is done. Hence, a detailed description of this process will be omitted. On the other hand, the contents reconstruction process reconstructs a new digital document 411, and the reconstructed digital document 411 may be input to the digital document operation process 402.

Since the reconstructed digital document 411 is not the digital document 411 generated in the digital document generation process 401, its signature information may often include a digest value of a non-archived content.

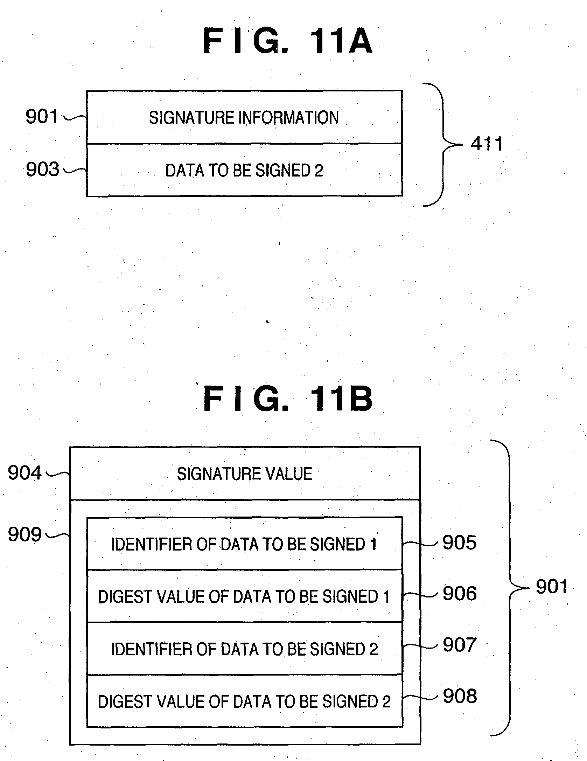

Hence, verification of the reconstructed digital document 411 will be explained below with reference to Figs. 11A and 11B. In this case, we assume that the user who receives the digital document 411 shown in Figs. 9A and 9B executes a reconstruction process to delete the data to be signed 1 (902), and distributes only data to be signed 2 (903) as contents.

The digital document 411 to be distributed at this time is rewritten, as shown in Figs. 11A and 11B. More specifically, the digital document 411 includes the signature information 901 and the data to be signed 2 (903). At this time, for example, when the signature data 901 is modified by, e.g., deleting the data 905 and 906 which are not required upon signature verification so as to eliminate redundancy, the signature value 904 itself becomes invalid. Therefore, the signature information 901, including information 904 to 908, will be used without any modifications.

A case will be examined below wherein the processing is done based on the flowchart in Fig. 10. In step S1005, an attempt is made to obtain the data to be signed 1 (902) based on the identifier 905 of the data to be signed 1 (902). However, the data to be signed 1 (902) cannot be obtained since it is not archived in the digital document 411 in Fig. 11A and 11B. Therefore, "NO" is determined in step S1005, the flow jumps to step S1008, and the processes from step S1004 are continued for the next identifier (identifier 907 in this case). In this way, for the data to be signed 1 (902), the digest matching process in step S1007 is skipped. On the other hand, the data to be signed 2 (903) is obtained in step S1004, and the digest matching process can be executed. Therefore, whether or not the data to be signed 2 (903) has been altered can be verified.

In this manner, a mechanism that skips the digest matching process for a sub-content which is included in the aggregate data 909 but is not archived in the digital document 411, and guarantees non-alteration/alteration for an archived sub-content can be provided.

In the conventional signature generation process, signature values must be provided to the data to be signed 1 and 2 (902 and 903), respectively. Therefore, the load on the calculation process becomes heavier. In particular, the computation volume increases in proportion to the number of divisions of the divided data to be signed.

By contrast, in this embodiment, the calculation process of the signature value can be done only once irrespective of the number of divisions of the contents. In this manner, according to this embodiment, the signature generation and signature verification processes can be executed far more efficiently than the prior art. Even when data is reconstructed using only some sub-contents, whether or not the sub-contents have been altered can be reliably verified.

As described above, according to the present invention, signature verification is allowed not only for text data but also for compound contents of digital data stored in various formats even when a sub-content as a part of such compound contents exists separately. In addition, the signature generation and signature verification processes can be efficiently executed.

### <Second Embodiment>

The verification process described in Fig. 10 of the first embodiment does not consider a case wherein the user permits the contents when some sub-contents have been altered, but remaining sub-contents have not been altered. Hence, this embodiment will explain a scheme that can cope with such a situation.

When a sub-content whose digest value obtained as the calculation result in step S1006 does not match that included in the aggregate data 909 is found, it is determined that the signature verification process ends in step S1007 of Fig. 10. However, even in such case, if sub-contents for which the two digest values match or those to be processed exist and non-alteration may be guaranteed, the signature verification process may be continued.

Hence, in this embodiment, even when the matching result in step S1007 is NG, the verification processes from steps S1003 to S1008 are continued for all remaining identifiers included in the aggregate data 909 without forcibly ending the process. Then, as the verification result, a list of sub-contents which have not been altered and those which have been altered is returned. In this manner, the user can be informed of information associated with the presence/absence of alteration for respective sub-contents via the computer 103, printer 104, or the like. In this way, the user can permit the contents when some sub-contents have been altered, but other sub-contents have not been altered. Therefore, a mechanism which allows sub-contents which have not been altered to be re-used can be provided.

### <Third Embodiment>

This embodiment will explain a case wherein the user can select data to be signed. In the above embodiments, the signature process is executed in the signature information generation process 407, and details of that process have been described using Fig. 8. In Fig. 8, the entire digital document data is processed as data to be processed, but the signature process is not executed by selecting any of regions of document data.

This embodiment is characterized in that a new process for selecting data to be signed is provided between the intermediate digital document generation process 405 and signature information generation process 407. This process will be referred to as a data to be signed selection process in this embodiment. The data to be signed selection process will be described below.

In the data to be signed selection process, image data scanned in the paper document input process 404 is displayed on the screen of the apparatus in the format shown in Fig. 6A. In this case, the user can designate a rectangular region of the data using a device pointer such as a mouse or the like. For example, the user can designate a region which describes "tour to visit... from Great Britain in 1901." using a device pointer.

When the display is made in the format shown in Fig. 6B, some pieces of rectangle information (602 to 606) can be selected by a device pointer. Since such rectangle information is a division unit which can be easily handled as a data structure which has already been internally held, such selection of the rectangle information is the process which corresponds to the signature information generation process 407 to be executed immediately after selection.

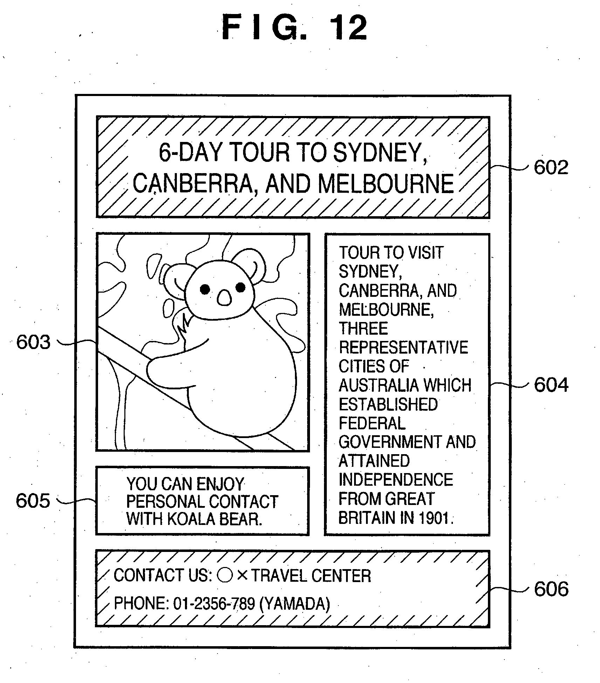

Fig. 12 shows an example wherein two divided regions 602 and 606 are selected from Fig. 6B as data to be signed. In Fig. 12, the selected divided regions are highlighted, thus providing a screen structure that allows the user to easily identify the selected regions.

By contrast, the user may often want to sign a region narrower than the region divided in the intermediate digital document generation process 405. For example, a region which is more likely to be divided in the future as a sub-content is narrower than the region divided in the intermediate digital document generation process 405 in some cases.

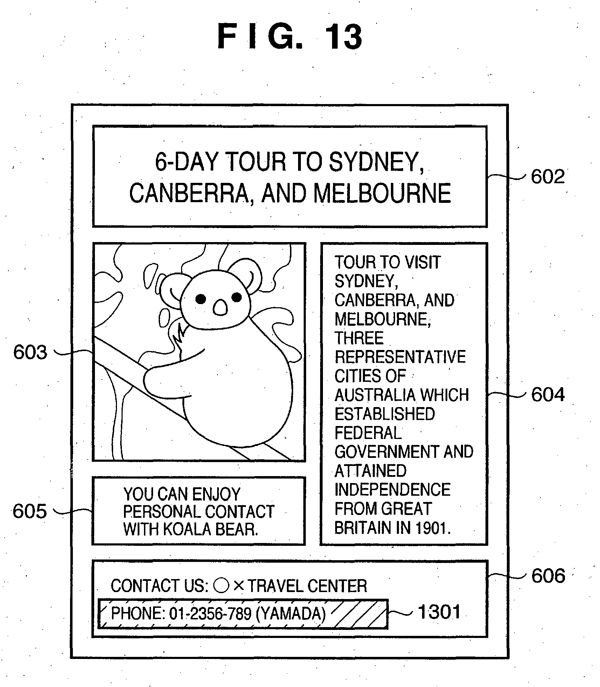

Assuming such case, a divided region can be divided into finer regions, as shown in Fig. 13, on the user interface according to this embodiment. As can be seen from this example, a region 1301 narrower than the region 606 is selected and highlighted.

When a narrower region is allowed to be designated, designation of a desired region (e.g., the region 1301 in Fig. 13) can be accepted from the user upon regional division in step S502 in the intermediate digital document generation process 405. Such designation can be accepted when the user designates a desired region using a device pointer. Such a technique is known to those who are skilled in the art, a detailed description thereof in this specification will be omitted.

When regions divided in the intermediate digital document generation process 405 can be further finely divided, and can be used as data to be signed in the signature information generation process 407, the selection method of data to be signed with a higher degree of freedom for the user can be provided.

Note that the region 1301 may be used as one of the divided regions, and difference information between the regions 606 and 1301 may be used as a new divided region. In the former case, the data size of the digital document 411 increases but processing is easy. In the latter case, a new regional division process is required.

As described above, the user can select data to be signed, and can execute the signature information generation process. The user can designate not only rectangular regions divided in advance but also arbitrary regions as data to be signed.

### <Embodiment Based on Other Cryptographic Algorithms>

In the above embodiments, the encryption process (secret conversion) based on a public key cryptosystem has been described. However, the present invention can be easily applied to an encryption process method based on a secret key cryptosystem and MAC (message authentication code) generation method, and the scope of the invention includes a case wherein the above embodiments are implemented by applying other cryptographic algorithms.

### <Other Embodiments>

Note that the present invention can be applied to an apparatus comprising a single device or to system constituted by a plurality of devices.

Furthermore, the invention can be implemented by supplying a software program, which implements the functions of the foregoing embodiments, directly or indirectly to a system or apparatus, reading the supplied program code with a computer of the system or apparatus, and then executing the program code. In this case, so long as the system or apparatus has the functions of the program, the mode of implementation need not rely upon a program.

Accordingly, since the functions of the present invention are implemented by computer, the program code installed in the computer also implements the present invention. In other words, the claims of the present invention also cover a computer program for the purpose of implementing the functions of the present invention.

In this case, so long as the system or apparatus has the functions of the program, the program may be executed in any form, such as an object code, a program executed by an interpreter, or script data supplied to an operating system.

Examples of storage media that can be used for supplying the program are a floppy disk, a hard disk, an optical disk, a magneto-optical disk, a CD-ROM, a CD-R, a CD-RW, a magnetic tape, a non-volatile type memory card, a ROM, and a DVD (DVD-ROM, DVD-R or DVD-RW).

As for the method of supplying the program, a client computer can be connected to a website on the Internet using a browser of the client computer, and the computer program of the present invention or an automatically-installable compressed file of the program can be downloaded to a recording medium such as a hard disk. Further, the program of the present invention can be supplied by dividing the program code constituting the program into a plurality of files and downloading the files from different websites. In other words, a WWW (World Wide Web) server that downloads, to multiple users, the program files that implement the functions of the present invention by computer is also covered by the claims of the present invention.

It is also possible to encrypt and store the program of the present invention on a storage medium such as a CD-ROM, distribute the storage medium to users, allow users who meet certain requirements to download decryption key information from a website via the Internet, and allow these users to decrypt the encrypted program by using the key information, whereby the program is installed in the user computer.

Besides the cases where the aforementioned functions according to the embodiments are implemented by executing the read program by computer, an operating system or the like running on the computer may perform all or a part of the actual processing so that the functions of the foregoing embodiments can be implemented by this processing.

Furthermore, after the program read from the storage medium is written to a function expansion board inserted into the computer or to a memory provided in a function expansion unit connected to the computer, a CPU or the like mounted on the function expansion board or function expansion unit performs all or a part of the actual processing so that the functions of the foregoing embodiments can be implemented by this processing.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An information processing apparatus (203) comprising:
a first generation unit (301) adapted to generate a plurality of data items to be signed (902, 903) by dividing a digital document into a plurality of regions;
a second generation unit (301) adapted to generate a plurality of first digest values (906, 908) corresponding to the plurality of data items to be signed and identifiers (905, 907) used to identify the plurality of data items to be signed, respectively;
a third generation unit (301) adapted to generate signature information (901) based on the plurality of first digest values and the identifiers; and
a fourth generation unit (301) adapted to generate a first signed digital document (411) which includes the signature information and the data items to be signed,
wherein said third generation unit generates a single signature value (904) by encrypting the plurality of first digest values and the identifiers, using an encryption key (406), and generates the signature information which contains the generated single signature value and sets (909) of the plurality of first digest values and the identifiers.

2. An information processing apparatus as claimed in claim 1, further comprising:
a selection acceptance unit (301) adapted to accept selection of the data item to be signed,
wherein, said third generation unit generates the signature information based on the first digest value and the identifier of the data item to be signed, the selection of which is accepted by said selection acceptance unit.

3. An information processing apparatus as claimed in claim 1 or 2, further comprising:
a region designation acceptance unit (301) adapted to accept designation of a predetermined region of the digital document,
wherein said first generation unit generates the data item to be signed for the predetermined region designated by said region designation acceptance unit.

4. A verification processing apparatus (205) which verifies a digital document based on a first signed digital document (411) generated by an information processing apparatus (203) according to any one of claims 1 to 3, the verification processing apparatus comprising:
an extraction unit (301) adapted to extract signature information (901) from the first signed digital document;
a determination unit (301) adapted to determine whether sets (909) of a plurality of first digest values (906, 908) and identifiers (905, 907) in the signature information have been altered or not based on a single signature value (904) in the signature information;
an obtaining unit (301) adapted to obtain a plurality of data items to be signed (902, 903) from the first signed digital document based on the identifiers when said determination unit determines that the sets of the plurality of first digest values and the identifiers have not been altered;
a calculation unit (301) adapted to calculate a plurality of second digest values corresponding to the plurality of data items to be signed;
a comparison unit (301) adapted to compare each of the first digest values and corresponding one of the second digest values; and
a verification result generation unit (301) adapted to generate a verification result based on the comparison results of the first digest values and the second digest values.

5. A verification processing apparatus as claimed in claim 4, wherein said determination unit determines whether the first digest value (906, 908) and the identifier (905, 907) in the signature information have been altered or not based on whether or not a result obtained by decrypting the signature value (904) included in the signature information using a decryption key (414) matches the first digest value and the identifier.

6. A verification processing apparatus as claimed in claim 4 or 5, wherein said obtaining unit obtains the data items to be signed even when said obtaining unit cannot obtain a data item to be signed corresponding to one of the plurality of identifiers but can obtain data items to be signed corresponding to other identifiers.

7. A verification processing apparatus as claimed in any one of claims 4 to 6, further comprising:
an operation unit (301) adapted to apply an operation to the first signed digital document; and
a fifth generation unit (301) adapted to generate a second signed digital document based on the first signed digital document which has undergone the operation,
wherein, when said operation unit reconstructs a digital document by selecting any of the data items to be signed included in the first signed digital document, said fifth generation unit generates the second signed digital document based on the signature information and the data items to be signed selected by the operation for the reconstructed digital document.

8. A method for controlling an information processing apparatus (203), comprising:
a first generation step (405) of generating a plurality of data items to be signed (902, 903) by dividing a digital document into a plurality of regions;
a second generation step (407, S801, S802) of generating a plurality of first digest values (906, 908) corresponding to the plurality of data items to be signed and identifiers (905, 907) used to identify the plurality of data items to be signed, respectively;
a third generation step (407, S805) of generating signature information (901) based on the plurality of the first digest values and the identifiers; and
a fourth generation step (408, 409) of generating a first signed digital document (411) which includes the signature information and the data items to be signed,
wherein, in the third generation step, a single signature value (904) is generated (S804) by encrypting the plurality of first digest values and the identifiers, using an encryption key (406), and the signature information is generated which contains the generated single signature value and sets (909) of the plurality of first digest values and the identifiers.

9. A method for controlling an information processing apparatus as claimed in claim 8, further comprising:
a selection acceptance step of accepting selection of the data item to be signed,
wherein in the third generation step, the signature information is generated based on the first digest value and the identifier of the data item to be signed, the selection of which is accepted in the selection acceptance step.

10. A method for controlling an information processing apparatus as claimed in claim 8 or 9, further comprising:
a region designation acceptance step (S502) of accepting designation of a predetermined region of the digital document,
wherein, in the first generation step, the data item to be signed is generated for the predetermined region designated in the region designation acceptance step.

11. A method for controlling a verification processing apparatus (205) which verifies a digital document based on a first signed digital document (411) generated by a method according to any one of claims 8 to 10, the method comprising:
an extraction step (S1001) of extracting signature information (901) from the first signed digital document;
a determination step (S1002) of determining whether sets (909) of a plurality of first digest values (906, 908) and identifiers (905, 907) in the signature information have been altered or not based on a single signature value (904) in the signature information;
an obtaining step (S1004) of obtaining a plurality of data items to be signed (902, 903) from the first signed digital document based on the identifiers when it is determined in the determination step that the sets of the plurality of first digest values and the identifiers have not been altered;
a calculation step (S1006) of calculating a plurality of second digest values corresponding to the plurality of data items to be signed;
a comparison step (S1007) of comparing each of the first digest values and corresponding one of the second digest values; and
a verification result generation step (S1008) of generating a verification result based on the comparison results of the first digest values and the second digest values.

12. A method for controlling a verification processing apparatus as claimed in claim 11, wherein, in the determination step, the determination whether the first digest values (906, 908) and the identifiers (905, 907) in the signature information have been altered or not is based on whether or not a result obtained by decrypting the signature value (904) included in the signature information using a decryption key (414) matches the first digest value and the identifier.

13. A method for controlling a verification processing apparatus as claimed in claim 11 or 12, wherein, in the obtaining step, the data item to be signed is obtained even when a data item to be signed corresponding to one of the plurality of identifiers cannot be obtained but data items to be signed corresponding to other identifiers can be obtained.

14. A method for controlling a verification processing apparatus as claimed in any one of claims 11 to 13, further comprising:
an operation step (416) of applying an operation to the first signed digital document; and
a fifth generation step of generating a second signed digital document based on the first signed digital document which has undergone the operation,
wherein, in the fifth generation step, when a digital document is reconstructed in the operation step by selecting any of the data items to be signed included in the first signed digital document, the second signed digital document is generated based on the signature information and the data items to be signed selected by the operation for the reconstructed digital document.

15. A computer program which when loaded into a computer and executed performs a method according to any one of claims 8 to 14.

16. A computer readable storage medium storing a computer program according to claim 15.

## Patentansprüche

1. Informationsverarbeitungsvorrichtung (203), umfassend:
eine erste Erzeugungseinheit (301), ausgebildet zum Erzeugen mehrerer zu signierender Datenelemente (902, 903) durch Aufteilen eines Digitaldokuments in mehrere Zonen;
eine zweite Erzeugungseinheit (301), ausgebildet zum Erzeugen mehrerer erster Digest- oder Hashwerte (906, 908), entsprechend den mehreren zu signierenden Datenelementen, und Identifizierer (905, 907), die zum Identifizieren der jeweiligen, mehreren zu signierenden Datenelemente verwendet werden;
eine dritte Erzeugungseinheit (301), ausgebildet zum Erzeugen von Signaturinformation (901) basierend auf den mehreren ersten Digest- oder Hashwerten und den Identifizierern; und
eine vierte Erzeugungseinheit (301), ausgebildet zum Erzeugen eines ersten signierten Digitaldokuments (411), welches die Signaturinformation und die zu signierenden Datenelemente enthält,
wobei die dritte Erzeugungseinheit einen einzelnen Signaturwert (904) durch Verschlüsseln der mehreren ersten Digest- oder Hashwerte und der Identifizierer unter Verwendung eines Verschlüsselungsschlüssels (406) erzeugt, und die Signaturinformation erzeugt, welche den erzeugten einzelnen Signaturwert sowie Sätze (909) der mehreren ersten Digest- oder Hashwerte und der Identifizierer beinhaltet.

2. Informationsverarbeitungsvorrichtung nach Anspruch 1, weiterhin umfassend:
eine Auswahlakzeptiereinheit (301), ausgebildet zum Akzeptieren einer Auswahl des zu signierenden Datenelements,
wobei die dritte Erzeugungseinheit die Signaturinformation basierend auf dem ersten Digest- oder Hashwert und dem Identifizierer des zu signierenden Datenelements erzeugt, dessen Auswahl von der Auswahlakzeptiereinheit akzeptiert wurde.

3. Informationsverarbeitungsvorrichtung nach Anspruch 1 oder 2, weiterhin umfassend:
eine Zonenbestimmungsakzeptiereinheit (301), ausgebildet zum Akzeptieren einer Bestimmung einer vorbestimmten Zone des Digitaldokuments,
wobei die erste Erzeugungseinheit das zu signierende Datenelement für die von der Zonenbestimmungsakzeptiereinheit bestimmte vorbestimmte Zone erzeugt.

4. Verifizierungsverarbeitungsvorrichtung (205), die ein Digitaldokument basierend auf einem ersten signierten Digitaldokument (411) verifiziert, welches durch eine Informationsverarbeitungsvorrichtung (203) nach einem der Ansprüche 1 bis 3 erzeugt wurde, wobei die Verifizierungsverarbeitungsvorrichtung umfasst:
eine Extrahiereinheit (301), ausgebildet zum Extrahieren von Signaturinformation (901) aus dem ersten signierten Digitaldokument;
eine Ermittlungseinheit (301), ausgebildet zum Ermitteln, ob Sätze (909) mehrerer erster Digest- oder Hashwerte (906, 908) und Identifizierer (905, 907) in der Signaturinformation geändert wurden oder nicht, basierend auf einem einzelnen Signaturwert (904) in der Signaturinformation;
eine Bezugseinheit (301), ausgebildet zum Beziehen mehrerer zu signierender Datenelemente (902, 903) aus dem ersten signierten Digitaldokument basierend auf den Identifizierern, wenn die Ermittlungseinheit ermittelt, dass die Sätze der mehreren ersten Digest- oder Hashwerte und Identifizierer nicht geändert wurden;
eine Berechnungseinheit (301), ausgebildet zum Berechnen mehrerer zweiter Digest- oder Hashwerte entsprechend den mehreren zu signierenden Datenelementen;
eine Vergleichseinheit (301), ausgebildet zum Vergleichen von jedem der ersten Digest- oder Hashwerte und entsprechendem der zweiten Digest- oder Hashwerte; und
eine Verifizierungsergebniserzeugungseinheit (301), ausgebildet zum Erzeugen eines Verifizierungsergebnisses basierend auf den Vergleichsergebnissen der ersten Digest- oder Hashwerte und der zweiten Digest- oder Hashwerte.

5. Verifizierungsverarbeitungsvorrichtung nach Anspruch 4, wobei die Ermittlungseinheit ermittelt, ob der erste Digest- oder Hashwert (906, 908) und der Identifizierer (905, 907) in der Signaturinformation geändert wurden oder nicht, basierend darauf, ob ein Ergebnis, erhalten durch Entschlüsseln des in der Signaturinformation enthaltenen Signaturwerts (904) unter Verwendung eines Entschlüsselungsschlüssels (414), mit dem ersten Digest- oder Hashwert und dem Identifizierer übereinstimmt oder nicht.

6. Verifizierungsverarbeitungsvorrichtung nach Anspruch 4 oder 5, wobei die Bezugseinheit die zu signierenden Datenelemente auch dann bezieht, wenn die Bezugseinheit ein einem der mehreren Identifizierer entsprechendes, zu signierendes Datenelement nicht beziehen kann, jedoch zu signierende Datenelemente beziehen kann, die anderen Identifizierern entsprechen.

7. Verifizierungsverarbeitungsvorrichtung nach einem der Ansprühe 4 bis 6, weiterhin umfassend:
eine Operationseinheit (301), ausgebildet zum Anwenden einer Operation auf das erste signierte Digitaldokument; und
eine fünfte Erzeugungseinheit (301), ausgebildet zum Erzeugen eines zweiten signierten Digitaldokuments basierend auf dem der Operation unterzogenen ersten signierten Digitaldokument,
wobei, wenn die Operationseinheit ein Digitaldokument durch Auswählen irgendeines der zu signierenden im ersten signierten Digitaldokument enthaltenen Datenelemente rekonstruiert, die fünfte Erzeugungseinheit das zweite signierte Digitaldokument basierend auf der Signaturinformation und den zu signierenden Datenelementen erzeugt, die durch die Operation für das rekonstruierte Digitaldokument ausgewählt sind.

8. Verfahren zum Steuern einer Informationsverarbeitungsvorrichtung (203), umfassend:
einen ersten Erzeugungsschritt (405) des Erzeugens mehrerer zu signierender Datenelemente (902, 903) durch Aufteilen eines Digitaldokuments in mehrere Zonen;
einen zweiten Erzeugungsschritt (407, S801, S802) des Erzeugens mehrerer erster Digest- oder Hashwerte (906, 908), entsprechend den mehreren zu signierenden Datenelementen, und von Identifizierern (905, 907), die zum Identifizieren der jeweiligen, mehreren zu signierenden Datenelemente verwendet werden;
einen dritten Erzeugungsschritt (407, S805) des Erzeugens von Signaturinformation (901) basierend auf den mehreren ersten Digest- oder Hashwerten und den Identifizierern, und
einen vierten Erzeugungsschritt (408, 409) des Erzeugens eines ersten signierten Digitaldokuments (411), welches die Signaturinformation und die zu signierenden Datenelemente enthält,
wobei im dritten Erzeugungsschritt ein einzelner Signaturwert (904) durch Verschlüsseln der mehreren ersten Digest- oder Hashwerte und der Identifizierer unter Verwendung eines Verschlüsselungsschlüssels (406) erzeugt wird (S804), und die Signaturinformation erzeugt wird, welche den erzeugten einzelnen Signaturwert und Sätze (909) der mehreren ersten Digest- oder Hashwerte und der Identifizierer beinhaltet.

9. Verfahren zum Steuern einer Informationsverarbeitungsvorrichtung nach Anspruch 8, weiterhin umfassend:
einen Auswahlakzeptierschritt des Akzeptierens einer Auswahl des zu signierenden Datenelements,
wobei im dritten Erzeugungsschritt die Signaturinformation basierend auf dem ersten Digest- oder Hashwert und dem Identifizierer des zu signierenden Datenelements erzeugt wird, dessen Auswahl im Auswahlakzeptierschritt akzeptiert wurde.

10. Verfahren zum Steuern einer Informationsverarbeitungsvorrichtung nach Anspruch 8 oder 9, weiterhin umfassend:
einen Zonenbestimmungsakzeptierschritt (S502) des Akzeptierens einer Bestimmung einer vorbestimmten Zone des Digitaldokuments,
wobei im ersten Erzeugungsschritt das zu signierende Datenelement für die im Zonenbestimmungsakzeptierschritt bestimmte vorbestimmte Zone erzeugt wird.

11. Verfahren zum Steuern einer Verifizierungsverarbeitungsvorrichtung (205), die ein Digitaldokument basierend auf einem ersten signierten Digitaldokument (411) verifiziert, welches von einem Verfahren nach einem der Ansprüche 8 bis 10 erzeugt wurde, wobei das Verfahren umfasst:
einen Extrahierschritt (S1001) des Extrahierens von Signaturinformation (901) aus dem ersten signierten Digitaldokument;
einen Ermittlungsschritt (S1002) des Ermittelns, ob Sätze (909) mehrerer erster Digest- oder Hashwerte (906, 908) und Identifizierer (905, 907) in der Signaturinformation geändert wurden oder nicht, basierend auf einem einzelnen Signaturwert (904) in der Signaturinformation;
einen Bezugsschritt (S1004) des Beziehens mehrerer zu signierender Datenelemente (902, 903) aus dem ersten signierten Digitaldokument, basierend auf den Identifizierern, wenn im Ermittlungsschritt ermittelt wird, dass die Sätze der mehreren ersten Digest- oder Hashwerte und der Identifizierer nicht geändert wurden;
einen Berechnungsschritt (S1006) des Berechnens mehrerer zweiter Digest- oder Hashwerte entsprechend den mehreren zu signierenden Datenelementen;
einen Vergleichsschritt (S1007) des Vergleichens von jedem der ersten Digest- oder Hashwerte und entsprechendem der zweiten Digest- oder Hashwerte; und
einen Verifizierungsergebniserzeugungsschritt (S1008) des Erzeugens eines Verifizierungsergebnisses basierend auf den Vergleichsergebnissen der ersten Digest- oder Hashwerte und der zweiten Digest- oder Hashwerte.

12. Verfahren zum Steuern einer Verifizierungsverarbeitungsvorrichtung nach Anspruch 11, wobei im Ermittlungsschritt die Ermittlung, ob die ersten Digest- oder Hashwerte (906, 908) und die Identifizierer (905, 907) in der Signaturinformation geändert wurden oder nicht, darauf basiert, ob ein Ergebnis, erhalten durch Entschlüsseln des in der Signaturinformation enthaltenen Signaturwerts (904) unter Verwendung eines Entschlüsselungsschlüssels (414), mit dem ersten Digest- oder Hashwert und dem Identifizierer übereinstimmt oder nicht.

13. Verfahren zum Steuern einer Verifizierungsverarbeitungsvorrichtung nach Anspruch 11 oder 12, wobei im Bezugsschritt das zu signierende Datenelement auch dann bezogen wird, wenn ein einer der mehreren Identifizierer entsprechendes, zu signierendes Datenelement nicht bezogen werden kann, jedoch zu signierende Datenelemente bezogen werden können, die anderen Identifizierern entsprechen.

14. Verfahren zum Steuern einer Verifizierungsverarbeitungsvorrichtung nach einem der Ansprüche 11 bis 13, weiterhin umfassend:
einen Operationsschritt (416) des Anwendens einer Operation auf das erste signierte Digitaldokument; und
einen fünften Erzeugungsschritt des Erzeugens eines zweiten signierten Digitaldokuments basierend auf dem der Operation unterzogenen ersten signierten Digitaldokument,
wobei im fünften Erzeugungsschritt, wenn ein Digitaldokument im Operationsschritt durch Auswählen irgendeines der zu signierenden im ersten signierten Digitaldokument enthaltenen Datenelemente rekonstruiert wurde, das zweite signierte Digitaldokument basierend auf der Signaturinformation und den zu signierenden Datenelementen erzeugt wird, die durch die Operation für das rekonstruierte Digitaldokument ausgewählt wurden.

15. Computerprogramm, welches nach Laden in einen Computer und bei Ausführung ein Verfahren nach einem der Ansprüche 8 bis 14 durchführt.

16. Computerlesbares Speichermedium, das ein Computerprogramm nach
Anspruch 15 speichert.
W/Dr/So/Ar/Ei

## Revendications

1. Appareil de traitement d'informations (203) comprenant :
une première unité génératrice (301) apte à générer une pluralité d'éléments de données devant être signés (902, 903) en divisant un document numérique en une pluralité de régions ;
une deuxième unité génératrice (301) apte à générer une pluralité de premières valeurs condensées (906, 908) correspondant à la pluralité d'éléments de données devant être signés et aux identifiants (905, 907) respectivement utilisés pour identifier la pluralité d'éléments de données devant être signés ;
une troisième unité génératrice (301) apte à générer des informations de signature (901) sur la base de la première pluralité de valeurs condensées et des identifiants ; et
une quatrième unité génératrice (301) apte à générer un premier document numérique signé (411) qui comprend les informations de signature et les éléments de données devant être signés,
dans lequel ladite troisième unité génératrice génère une valeur de signature unique (904) en cryptant la pluralité de premières valeurs condensées et les identifiants, en utilisant une clé de cryptage (406), et génère les informations de signature qui contiennent la valeur de signature générée unique et des ensembles (909) de la pluralité de premières valeurs condensées et des identifiants.

2. Appareil de traitement d'informations selon la revendication 1, comprenant en outre :
une unité d'acceptation de la sélection (301) apte à accepter la sélection de l'élément de données devant être signé,
dans lequel ladite troisième unité génératrice génère les informations de signature sur la base de la première valeur condensée et de l'identifiant de l'élément de données devant être signé, dont la sélection est acceptée par ladite unité d'acceptation de la sélection.

3. Appareil de traitement d'informations selon la revendication 1 ou 2, comprenant en outre :
une unité d'acceptation de la désignation de région (301) apte à accepter la désignation d'une région prédéterminée du document numérique,
dans lequel ladite première unité génératrice génère l'élément de données devant être signé pour la région prédéterminée désignée par ladite unité d'acceptation de la désignation de région.

4. Appareil de traitement de vérification (205) qui vérifie un premier document numérique sur la base d'un premier document numérique signé (411) généré par un appareil de traitement d'informations (203) selon l'une quelconque des revendications 1 à 3, l'appareil de traitement de vérification comprenant :
une unité d'extraction (301) apte à extraire des informations de signature (901) à partir du premier document numérique signé ;
une unité de détermination (301) apte à déterminer si des ensembles (909) d'une pluralité de premières valeurs condensées (906, 908) et des identifiants (905, 907) contenus dans les informations de signature ont été modifiés ou non sur la base d'une valeur de signature unique (904) contenue dans les informations de signature ;
une unité d'obtention (301) apte à obtenir une pluralité d'éléments de données devant être signés (902, 903) à partir du premier document numérique signé sur la base des identifiants lorsque ladite unité de détermination détermine que les ensembles de la pluralité de premières valeurs condensées et des identifiants n'ont pas été modifiés ;
une unité de calcul (301) apte à calculer une deuxième pluralité de valeurs condensées correspondant à la pluralité d'éléments de données devant être signés ;
une unité de comparaison (301) apte à comparer chacune des premières valeurs condensées et l'une correspondante des deuxièmes valeurs condensées ; et
une unité génératrice de résultat de vérification (301) apte à générer un résultat de vérification sur la base des résultats de comparaison des premières valeurs condensées et des deuxièmes valeurs condensées.

5. Appareil de traitement de vérification selon la revendication 4, dans lequel ladite unité de détermination détermine si la première valeur condensée (906, 908) et l'identifiant (905, 907) contenus dans les informations de signature ont été modifiés ou non, selon que le résultat obtenu en décryptant la valeur de signature (904) contenue dans les informations de signature en utilisant une clé de décryptage (414) correspond ou non à la première valeur condensée et à l'identifiant.

6. Appareil de traitement de vérification selon la revendication 4 ou 5, dans lequel ladite unité d'obtention obtient les éléments de données devant être signés même lorsque ladite unité d'obtention ne peut pas obtenir d'élément de données devant être signé correspondant à l'un de la pluralité d'identifiants, mais peut obtenir des éléments de données devant être signés correspondant à d'autres identifiants.

7. Appareil de traitement de vérification selon l'une quelconque des revendications 4 à 6, comprenant en outre :
une unité d'opération (301) apte à appliquer une opération au premier document numérique signé ; et
une cinquième unité génératrice (301) apte à générer un deuxième document numérique signé sur la base du premier document numérique signé qui a été soumis à l'opération,
dans lequel, lorsque ladite unité d'opération reconstruit un document numérique en sélectionnant l'un quelconque des éléments de données devant être signés contenus dans le premier document numérique signé, ladite cinquième unité génératrice génère le deuxième document numérique signé sur la base des informations de signature et des éléments de données devant être signés sélectionnés par l'opération pour le document numérique reconstruit.

8. Procédé de commande d'un appareil de traitement d'informations (203), comprenant :
une première étape de génération (405) consistant à générer une pluralité d'éléments de données devant être signés (902, 903) en divisant un document numérique en une pluralité de régions ;
une deuxième étape de génération (407, S801, S802) consistant à générer une pluralité de premières valeurs condensées (906, 908) correspondant à la pluralité d'éléments de données devant être signés et des identifiants (905, 907) respectivement utilisés pour identifier la pluralité d'éléments de données devant être signés ;
une troisième étape de génération (407, S805) consistant à générer des informations de signature (901) sur la base de la pluralité de premières valeurs condensées et des identifiants ; et
une quatrième étape de génération (408, 409) consistant à générer un premier document numérique signé (411) qui contient les informations de signature et les éléments de données devant être signés,
dans lequel, à la troisième étape de génération, une valeur de signature unique (904) est générée (S804) en cryptant la pluralité de premières valeurs condensées et les identifiants, en utilisant une clé de cryptage (406), et les informations de signature générées contiennent la valeur de signature générée unique et des ensembles (909) de la pluralité de premières valeurs condensées et des identifiants.

9. Procédé de commande d'un appareil de traitement d'informations selon la revendication 8, comprenant en outre :
une étape d'acceptation de la sélection consistant à accepter la sélection de l'élément de données devant être signé,
dans lequel, à la troisième étape de génération, les informations de signature sont générées sur la base de la première valeur condensée et de l'identifiant de l'élément de données devant être signé dont la sélection est acceptée à l'étape d'acceptation de la sélection.

10. Procédé de commande d'un appareil de traitement d'informations selon la revendication 8 ou 9, comprenant en outre :
une étape d'acceptation de la désignation d'une région (S502) consistant à accepter la désignation d'une région prédéterminée du document numérique,
dans lequel, à la première étape de génération, l'élément de données devant être signé est généré pour la région prédéterminée désignée à l'étape d'acceptation de la désignation d'une région.

11. Procédé de commande d'un appareil de traitement de vérification (205) qui vérifie un document numérique sur la base d'un premier document numérique signé (411) généré par un procédé selon l'une quelconque des revendications 8 à 10, le procédé comprenant :
une étape d'extraction (S1001) consistant à extraire des informations de signature (901) à partir du premier document numérique signé ;
une étape de détermination (S1002) consistant à déterminer si des ensembles (909) d'une pluralité de premières valeurs condensées (906, 908) et d'identifiants (905, 907) contenus dans les informations de signature ont ou non été modifiés sur la base d'une valeur de signature unique (904) contenue dans les informations de signature ;
une étape d'obtention (S1004) consistant à obtenir une pluralité d'éléments de données devant être signés (902, 903) à partir du premier document numérique signé sur la base des identifiants lorsqu'il est déterminé à l'étape de détermination que les ensembles de la pluralité de premières valeurs condensées et des identifiants n'ont pas été modifiés ;
une étape de calcul (S1006) consistant à calculer une pluralité de deuxièmes valeurs condensées correspondant à la pluralité d'éléments de données devant être signés ;
une étape de comparaison (S1007) consistant à comparer chacune des premières valeurs condensées et l'une, correspondante, des deuxièmes des valeurs condensées ; et
une étape de génération de résultat de vérification (S1008) consistant à générer un résultat de vérification sur la base des résultats de comparaison des premières valeurs condensées et des deuxièmes valeurs condensées.

12. Procédé de commande d'un appareil de traitement de vérification selon la revendication 11, dans lequel, à l'étape de détermination, la détermination du fait de savoir si les premières valeurs condensées (906, 908) et les identifiants (905, 907) contenus dans les informations de signature ont ou non été modifiés est basée sur le fait de savoir si un résultat obtenu en décryptant la valeur de signature (904) contenue dans les informations de signature en utilisant une clé de décryptage (414) correspond ou non à la première valeur condensée et à l'identifiant.

13. Procédé de commande d'un appareil de traitement de vérification selon la revendication 11 ou 12, dans lequel, à l'étape de d'obtention, l'élément de données devant être signé est obtenu même lorsqu'un élément de données devant être signé correspondant à l'un de la pluralité d'identifiants ne peut pas être obtenu, mais lorsque des éléments de données devant être signés correspondant à d'autres identifiants peuvent être obtenus.

14. Procédé de commande d'un appareil de traitement de vérification selon l'une quelconque des revendications 11 à 13, comprenant en outre :
une étape d'opération (416) consistant à appliquer une opération au premier document numérique signé ; et
une cinquième étape de génération consistant à générer un deuxième document numérique signé sur la base du premier document numérique signé ayant été soumis à l'opération,
dans lequel, à la cinquième étape de génération, lorsqu'un document numérique est reconstruit à l'étape d'opération en sélectionnant l'un quelconque des éléments de données devant être signés contenus dans le premier document numérique signé, le deuxième document numérique signé est généré sur la base des informations de signature et des éléments de données devant être signés sélectionnés par l'opération destinée au document numérique reconstruit.

15. Programme informatique qui, lorsqu'il est chargé sur un ordinateur et exécuté, met en oeuvre un procédé selon l'une quelconque des revendications 8 à 14.

16. Support de stockage lisible par ordinateur stockant un programme informatique selon la revendication 15.
